Europäisches Patentamt

European Patent Office

Office européen des brevets

(19)

(11) Numéro de publication: **0 330 791**
**A1**

(12) ## DEMANDE DE BREVET EUROPEEN

(21) Numéro de dépôt: 88402585.9

(22) Date de dépôt: **12.10.88**

(51) Int. Cl.⁴: **D05C 7/00**

(30) Priorité: **13.10.87 FR 8714484**

(43) Date de publication de la demande:
**06.09.89 Bulletin 89/36**

(84) Etats contractants désignés:
**AT BE CH DE ES FR GB GR IT LI LU NL SE**

(71) Demandeur: **E.N.S.A.I.T.**
**2, Place des Martyrs de la Résistance**
**F-59100 Roubaix(FR)**

(72) Inventeur: **Degre, Yvon**
**c/o 2, Place des Martyrs de la Résistance**
**F-59100 ROUBAIX(FR)**
Inventeur: **Rinsveldt, Jean**
**c/o 2, Place des Martyrs de la Résistance**
**F-59100 ROUBAIX(FR)**

(54) **Machine à broder.**

(57) L'invention est relative à une machine à broder. Elle trouvera particulièrement son application dans le domaine textile pour exécuter des broderies.

La machine à broder comporte au moins une broche mécanisée (9) équipée d'une aiguille à crochet (5) et un cadre (4) mobile maintenant tendu ledit matériau de base (6) à broder.

En outre, elle présente des moyens (3) de positionnement et de déplacement bidirectionnel du cadre (4) mobile par rapport à l'aiguille à crochet (5), pour placer le matériau de base à broder (6) dans un plan sensiblement perpendiculaire à l'axe (7) longitudinal de déplacement de l'aiguille (5) et répétitivement à chaque point, pour positionner la zone à broder (8) sous l'aiguille (5) en suivant la courbe directrice (1) du motif, et placer le cadre (4) selon une trajectoire sensiblement tangente à ladite courbe directrice (1) du motif.

Fig: 2

EP 0 330 791 A1

## MACHINE A BRODER

L'invention est relative à une machine à broder. Elle trouvera particulièrement son application dans le domaine textile pour exécuter des broderies soit par le point de chaînette, soit par le point de mousse sur tout matériau de base à broder adapté.

Dans le domaine de la broderie, on connaît de nos jours deux types de machines à broder, les unes dites machines piqueuses permettant d'effectuer des points noués ou jetés, les autres dites machines de type Cornely permettant d'effectuer des points de chaînette ou des points de mousse.

Le premier type de machines piqueuses ne pose pas de problème particulier au niveau de la broderie, par contre les machines du type Cornely sont beaucoup plus élaborées techniquement, ceci étant nécessité par le point de chaînette effectué.

En effet, sur les machines à broder de type Cornely, afin de pouvoir effectuer des points de chaînette ou des points de mousse, la machine comporte une aiguille à crochet dont le mouvement de descente est commandé mécaniquement et présente également un pied presseur qui a la particularité de pouvoir se décentrer dans toutes les directions lorsqu'il est en l'air et de revenir se recentrer sur l'axe de l'aiguille pour entraîner le tissu convenablement.

En effet, dans ce type de machines, pour pouvoir réaliser un motif de broderie défini par une courbe directrice quelconque, il faut diriger le matériau de base à broder par rapport à l'aiguille pour que l'aiguille à crochet soit tangente à ladite courbe directrice.

C'est notamment le but du pied presseur tout particulier que possèdent ces machines à broder, c'est-à-dire de pouvoir déplacer le tissu dans tous les sens possibles, par rapport à l'axe du crochet lorsque ce dernier est en position haute.

Actuellement, ces machines à broder sont manuelles et le décentrage du pied pressure est commandé par l'opérateur qui, en fonction du motif à broder, provoque le décentrage souhaité du pied afin que l'aiguille coopère avec ce dernier lors de la broderie.

Les machines connues à ce jour présentent une chaîne cinématique mécanique qui, à partir de cames, engrenages, renvois d'axe et d'une manivelle de commande, permet de positionner le pied presseur. A cet égard, à un déplacement angulaire θ de la manivelle correspond le même déplacement angulaire de la direction de décentrage du pied. Ceci est fait pour que l'opérateur ait une sensation de liaison entre la position de la manivelle et le déplacement du tissu.

Jusqu'à ce jour, de telles machines n'ont pas encore été automatisées dans ce sens que les broderies effectuées sur de telles machines sont toujours commandées et réalisées sous le contrôle manuel de l'opérateur.

Ainsi, les coûts de revient de telles broderies sont largement pénalisés par le prix de la main d'oeuvre nécessaire pour les effectuer et dépendent essentiellement de la dextérité de l'opérateur.

De plus, les différentes synchronisations entre les éléments étant mécaniques, de telles machines à broder sont d'une conception technique très sophistiquée, sujettes aux pannes et nécessairement limitées en cadence.

Le but de la présente invention est de proposer une machine à broder, permettant d'effectuer des broderies soit par le point de chaînette, soit par le point mousse sur tout matériau de base à broder adapté qui utilise une chaîne cinématique différente afin, d'une part, de faciliter la conception technique de la machine et d'autre part, d'abaisser le coût de revient des broderies réalisées en augmentant la cadence de fabrication et en automatisant la production.

Un des buts de la présente invention est de proposer une machine à broder de type Cornely, qui n'utilise plus de pied presseur pour le déplacement du tissu à broder, ce dernier étant alors placé sur un cadre de broderie dont les mouvements sont parfaitement contrôlés et commandés.

Un des buts de la présente invention est de proposer une machine à broder dont lat chaîne cinématique est organisée autour d'éléments traditionnels simplifiables synchronisés électriquement et commandés par un calculateur électronique.

Un des buts de la présente invention est de proposer une machine à broder du type Cornely qui permet de travailler de manière répétitive sans contrôle d'opérateur, ce après un cycle d'apprentissage dans lequel la broderie est effectuée effectivement sous le contrôle d'un opérateur mais mémorisée automatiquement dans un système électronique pour pouvoir ensuite le reproduire indéfiniment.

D'autres buts et avantages de la présente invention apparaîtront au cours de la description qui n'est donnée cependant qu'à titre indicatif et qui n'a pas pour but de la limiter.

Selon la présente invention, la machine à broder, permettant d'exécuter des broderies soit par le point de chaînette, soit par le point mousse sur tout matériau de base à broder adapté, le motif de broderie étant défini au moins par une courbe directrice quelconque, ladite machine à broder comportant au moins une broche mécanisée équipée d'une aiguille à crochet et un cadre mobile maintenant tendu ledit matériau de base à broder, est caractérisée par le fait qu'elle présente des moyens de positionnement et de déplacement bidirectionnel du cadre mobile par rapport à l'aiguille du crochet pour placer le matériau de base à broder dans un plan sensiblement perpendiculaire à l'axe longitudinal de déplacement de l'aiguille et répétitivement à chaque point, pour positionner la zone à broder sous l'aiguille en suivant la courbe directrice du motif, et déplacer le cadre selon une trajectoire sensiblement tangente à ladite courbe directrice du motif.

La présente invention sera mieux comprise à la lecture de la description suivante, accompagnée des dessins en annexe qui en font partie intégrante.

La figure 1 représente le tracé théorique d'un motif de broderie qui doit être effectué sur une machine à broder au point de chaînette.

La figure 2 représente schématiquement les différents éléments constitutifs de la présente invention constituant la machine à broder.

La figure 3 représente en détail un mode de réalisation des moyens caractéristiques de la présente invention de positionnement et de déplacement bidirectionnel du matériau à broder par rapport à l'aiguille.

La figure 4 montre un graphe permettant la compréhension du déplacement géométrique desdits moyens représentés à la figure 3.

La figure 5 illustre schématiquement un mode d'application de la machine à broder de la présente invention.

La présente invention vise une machine à broder permettant d'exécuter des broderies soit par le point de chaînette, soit par le point de mousse, sur tout matériau de base à broder adapté.

De telles machines mécaniques sont actuellement connues par l'Homme du métier sous le nom de machines à broder type Cornely.

Ces machines à broder comportent une broche mécanisée équipée d'une aiguille à crochet et un pied presseur apte à pouvoir se décentrer dans toutes les directions pour faire avancer le tissu tangentiellement à la courbe directrice du motif.

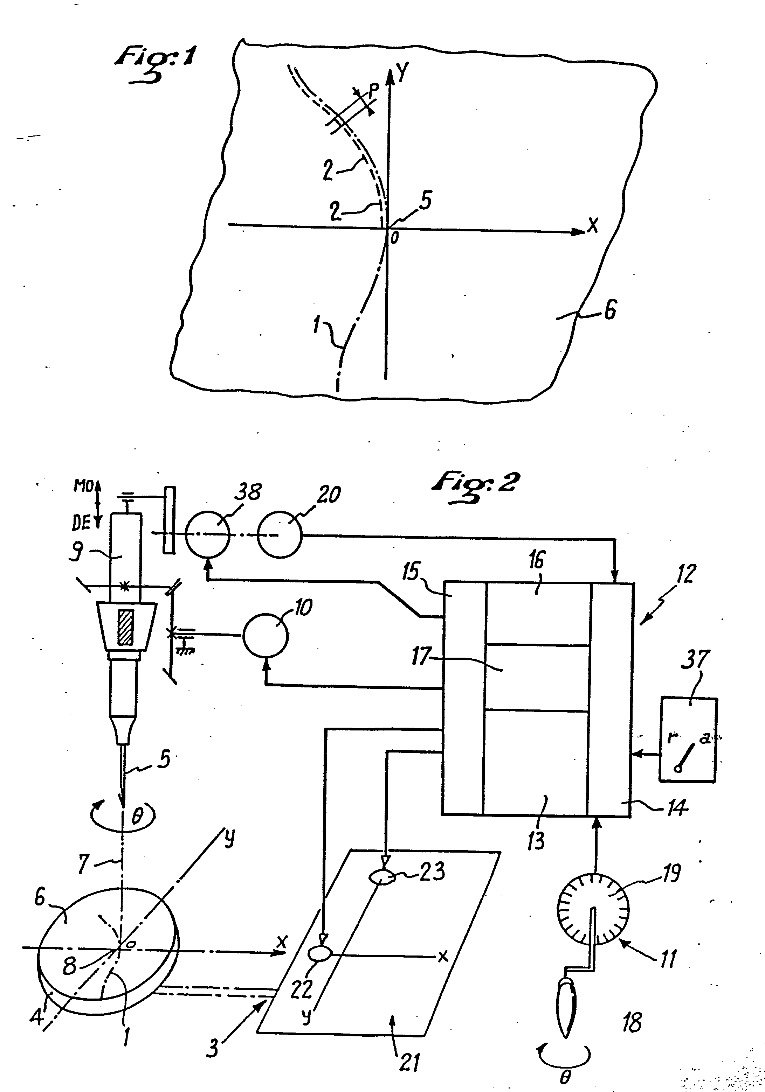

La figure 1 illustre schématiquement le point de broderie à réaliser.

Soit tout d'abord un système d'axes X et Y orthonormé dont le point 0 correspond à l'axe de l'aiguille à crochet.

Le motif de broderie est défini par au moins une courbe directrice quelconque (1), le point du pas de broderie est également fixé et repéré par "p".

La valeur de "p" est toutefois réglable par tout moyen connu de l'Homme de Métier et notamment électrique par un actionneur électrique.

Le but du pied presseur des machines connues est, à chaque relevage de l'aiguille, de déplacer le matériau de base à broder par friction selon une trajectoire sensiblement tangente à ladite courbe directrice du motif.

A cet égard, les différents points du motif, espacés pour les besoins de la compréhension sur la figure, sont repérés (2). On remarque que ces différents points de chaînette réalisés le sont tous dans une direction sensiblement tangente à ladite courbe directrice du motif (1).

Selon la présente invention, comme le montre particulièrement la figure 2, on remplace le pied presseur traditionnel par des moyens (3) de positionnement et de déplacement bidirectionnel d'un cadre (4) mobile par rapport à l'aiguille à crochet (5), pour placer le matériau de base à broder (6) dans un plan sensiblement perpendiculaire à l'axe longitudinal (7) de déplacement de l'aiguille (5) et, répétitivement à chaque point, pour positionner la zone à broder sous l'aiguille (5) en suivant la courbe directrice (1) du motif, et déplacer le cadre (4) selon une trajectoire sensiblement tangente à ladite courbe directrice du motif (1).

Par ailleurs, la machine à broder de la présente invention est structurellement différente des machines à broder du même type traditionnelles en ce sens que la chaîne cinématique au lieu d'être mécanique propose une synchronisation électrique dans laquelle les différents éléments constituants sont indépendants mécaniquement les uns des autres comme le montre la figure 2.

En effet, la machine à broder comporte au moins une broche mécanisée (9) équipée de ladite aiguille à crochet (5) et un cadre mobile (4) maintenant tendu ledit matériau de base à broder (6).

En ce qui concerne la broche mécanisée (9), elle est commandée angulairement par un organe moteur (10) positionnant le crochet tangentiellement vers l'arrière par rapport au déplacement et la réalisation structurelle du système de déplacement vertical de l'aiguille est faite notamment par un organe moteur (38) selon la technique connue de l'homme du métier.

En outre, lesdits moyens (3) de positionnement et de déplacement bidirectionnel du cadre sont asservis à un dispositif de commande (11) dont les mouvements sont l'image de ceux desdits moyens (3).

Cesdits moyens de positionnement et de déplacement bidirectionnel du cadre et de commande angulaire de la broche sont également asservis à des moyens (12) de traitement et de calcul électronique dans lesquels la courbe directrice (1) du motif a été enregistrée.

En ce qui concerne la constitution des moyens de traitement et de calcul (12), ils sont organisés autour d'une unité centrale électronique programmée, selon les techniques connues de l'Homme du métier considéré et présentent :
- des moyens (14) d'introduction de l'image de la courbe directrice (1) du motif à broder, coopérant avec ledit dispositif de commande (11),
- des moyens actionneurs (15), commandés et contrôlés par l'unité centrale (13), pour controler les déplacements angulaires et verticaux de l'aiguille (5) notamment par l'intermédiaire des organes moteurs (10) et (38) et des moyens (3) de positionnement et de déplacement du cadre.

En ce qui concerne la réalisation pratique, ces moyens (14) et (15) sont respectivement constitués par des cartes interfaces entrée et sortie qui permettent de réaliser la connexion des différents capteurs d'entrée et d'actionneurs de sortie selon des techniques connues de l'homme du métier considéré.

De même, en ce qui concerne l'unité centrale (13), elle sera organisée selon les techniques connues, autour d'un microprocesseur et comportera un circuit de mémoire (16) ainsi qu'un circuit de calcul (17) permettant de traiter toutes les informations reçues et d'envoyer les messages de commande vers les actionneurs de sortie.

En ce qui concerne le dispositif de commande (11), il sera notamment constitué par un dispositif qui permettra à l'utilisateur de rappeler les machines mécaniques traditionnelles.

Ce dispositif (11) comporte avantageusement des moyens de manoeuvre (18) tels qu'à un déplacement angulaire $\theta$ dudit dispositif de commande (11) corresponde de même un déplacement angulaire du crochet (5) et un déplacement adapté du cadre mobile (4).

Ces moyens de manoeuvre (18) sont associés à un capteur de position (19) angulaire plus ou moins 360° d'angle.

Dans un exemple de réalisation pratique, on a obtenu de bons résultats en utilisant en tant que capteur de position angulaire (19) un générateur rotatif d'impulsion optique délivrant dans un code binaire la position angulaire de son arbre de commande, et en tant que moyen de manoeuvre une manivelle de commande rappelant les dispositifs traditionnels connus sur ce type de brodeuse.

De plus, les moyens (12) de traitement et de calcul comportent des moyens (37) de sélection de mode programme permettant le fonctionnement de la machine à broder selon deux modes, à savoir :
- un mode "apprentissage", position dans laquelle on enregistre la courbe directrice (1) du motif à broder,
- un mode "reproduction", position par laquelle on réalise répétitivement le motif sans intervention manuelle.

Dans la position "apprentissage", l'opérateur effectue manuellement la broderie selon la technique traditionnelle en agissant sur le dispositif de commande (11) pour placer le tissu ou la matière à broder de façon souhaitée.

Pendant cette exécution, qui est en quelque sorte une exécution manuelle, les moyens de traitement et de calcul (12) enregistrent dans les mémoires (16) les différentes positions du capteur de position (19). Il s'agit donc d'un apprentissage. A la suite de cet apprentissage, l'unité centrale (13) peut relire le programme enregistré et effectuer des reproductions répétitives sans intervention manuelle.

Toutefois, on pourrait envisager d'utiliser tout autre dispositif de commande approprié permettant d'assurer la même fonction en vue d'arriver au même résultat.

Par ailleurs, afin de synchroniser le déplacement du cadre (4) avec le déplacement de l'aiguille (5), notamment lorsque celle-ci est en position haute, la broche mécanisée (9) comporte un détecteur de position (20) de l'aiguille à crochet (5), accouplé à l'organe moteur (38).

Ce détecteur de position (20) est notamment apte à coopérer avec les moyens de traitement et de calcul (12) et plus spécialement envoie des informations vers l'interface d'entrée (14) décrite ci-dessus.

Cela étant, une originalité de la machine à broder de la présente invention réside dans le mode de déplacement contrôlé du matériau de base à broder (6).

A cet égard, les moyens (3) de positionnement et de déplacement bidirectionnel du cadre (4) asservis sont constitués par tout dispositif de balayage mécanique permettant de déplacer dans un plan horizontal bidirectionnellement ledit cadre (4) en abscisse X et/ou en ordonnée Y, comportant au moins deux organes moteurs de déplacement (22, 23) pilotés par lesdits moyens de traitement et de calcul (12).

La figure 2 illustre un premier mode de réalisation constitué par une table bidirectionnelle X - Y dans laquelle les mouvements de commande de déplacement sont disposés perpendiculaires entre eux afin de commander l'un le déplacement en X, l'autre le déplacement en Y.

De tels dispositifs sont connus de l'Homme de l'Art et couramment utilisés par exemple dans les tables traçantes ou pour les machines outils.

Cependant, la présente demande propose un mode de réalisation d'un tel dispositif de balayage illustré à la figure 3.

Dans ce cas, les moyens de positionnement et de déplacement bidirectionnel en X et/ou en Y du cadre (4) sont constitués par un dispositif de balayage mécanique (21) comprenant :
- des moyens de commande et de déplacement (24, 25) disposés tels qu'ils créent deux mouvements élémentaires dits "parallèles" Xo et Xl dont les directions sont parallèles,
- des moyens de guidage unidirectionnel (26) permettant de conduire dans leur déplacement deux chariots (27, 28), commandé respectivement par des moyens moteurs (29, 30) selon deux axes de déplacement parallèles Xo et Xl,
- des moyens de liaison articulés (31) qui relient respectivement le cadre (4) à déplacer à chaque moyen de commande de déplacement (24, 25), aptes à transformer les deux mouvements élémentaires dits "parallèles" en deux mouvements élémentaires dits "orthogonaux" X et Y.

Plus précisément, les moyens de commande et de déplacement (24, 25) sont constitués par deux ensembles cabestans, commandés chacun par un organe moteur (29, 30), disposés parallèlement et coopérant avec les deux chariots (27, 28), solidaires respectivement de chaque cabestan et guidés par lesdits moyens de guidage unidirectionnels (20), aptes à se déplacer indépendamment respectivement selon les directions Xo et Xl parallèles.

En ce qui concerne les moyens de guidage (26), ils sont constitués par une table présentant des rainures de guidage (32) dans lesquelles coulissent lesdits chariots (27, 28) selon l'abscisse X.

En ce qui concerne les moyens de liaison articulés (31), ils sont formés par un ensemble d'au moins trois tiges rigides articulées (33, 34, 35) définissant un trapèze ACBMD.

Deux des tiges repérées (33) et (34) sont disposées en triangle AMB et l'une de leurs extrémités M sont réunies entre elles en (36). Les deux autres extrémités des tiges (33, 34) sont respectivement reliées à chaque chariot (27, 28).

La troisième tige (35) est disposée parallèlement à l'une des deux premières tiges (33, 34) pour définir avec elle un parallélogramme déformable MBCD.

De plus, chaque extrémité est montée sur une articulation du type rotule par exemple, ce qui fait qu'un déplacement Xo et Xl des chariots (27, 28) provoque un déplacement X, Y du segment commun MD sur lequel est alors fixé le cadre (4).

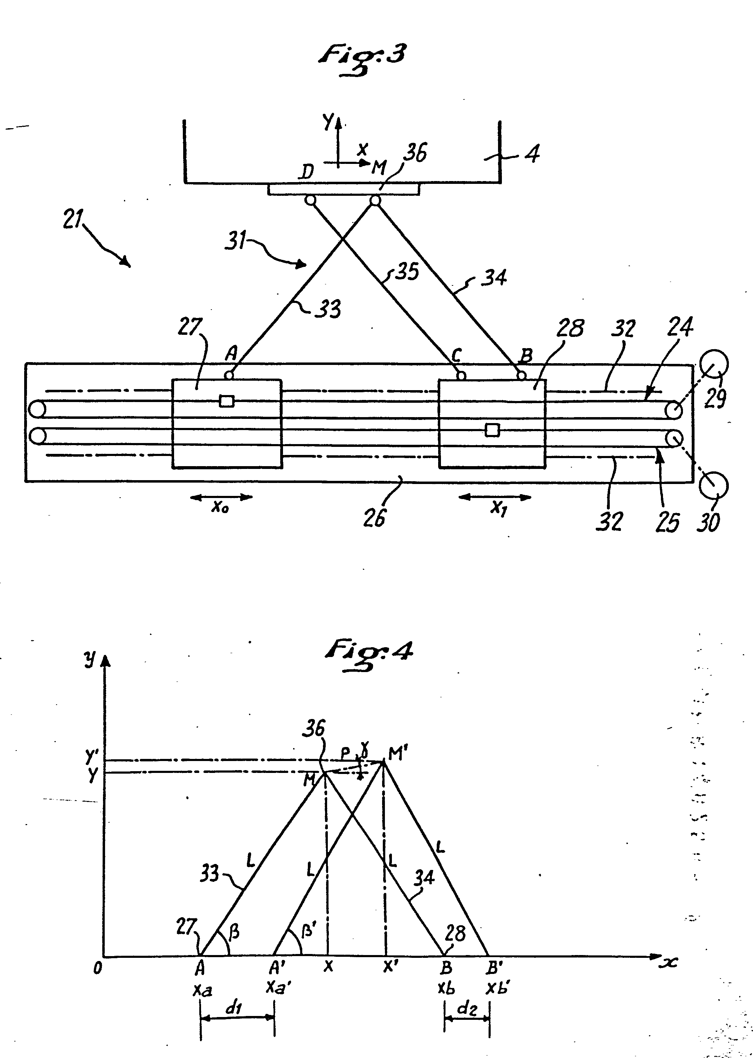

La figure 4 illustre le déplacement géométrique du point M vers un point M'. Ceci est créé par la déformation du triangle AMB provoquée par le mouvement relatif des chariots (27, 28).

Soit un point M défini par ses coordonnées X et Y lors d'une première position des chariots (27, 28) en A et B.

Soit le point M' défini par des coordonnées X' et Y' en fonction des positions A' et B' des chariots (27) et (28). Pour effectuer un point de broderie, l'aiguille (5) étant fixe, il faut déplacer le cadre (4) selon MM'. La longueur du pas de broderie est définie par "p" et l'angle $\gamma$ que fait le segment MM' par rapport à l'abscisse X.

Pour se déplacer de M à M', il faut donc provoquer les déplacements respectifs des chariots (27) et (28) repérés par (d1) et (d2).

Les équations suivantes permettent de définir les relations à respecter pour effectuer ces déplacements :

$$M \begin{vmatrix} X &= Xa &+ L.\cos\beta &= Xb &- L.\cos\beta \\ Y &= L.\sin\beta \end{vmatrix}$$

$$M' \begin{vmatrix} X' &= Xa' &+ L.\cos\beta &= Xb' &- L.\cos\beta \\ Y' &= L.\sin\beta \end{vmatrix}$$

d1 = Xa' - Xa = (X' - L.cos$\beta$') - (X - L.cos$\beta$)
d1 = X' - L.cos(Arcsin(Y'/L)) = X + L.cos(Arcsin(Y/L))
d2 = Xb' - Xb = (X' + L.cos$\beta$') - (X + L.cos$\beta$)
d2 = X' + L.cos(Arcsin(Y'/L)) - X - L.cos(Arcsin(Y/L))

A ce sujet, lesdits moyens de traitement et de calcul électronique (12) permettront avantageusement de commander les déplacements Xo et Xl de chaque chariot (27, 28) afin de transformer la cinématique différentielle non linéaire en des ordres de commande adaptés aux organes moteurs (29, 30) correspondant pour obtenir le déplacement X Y souhaité.

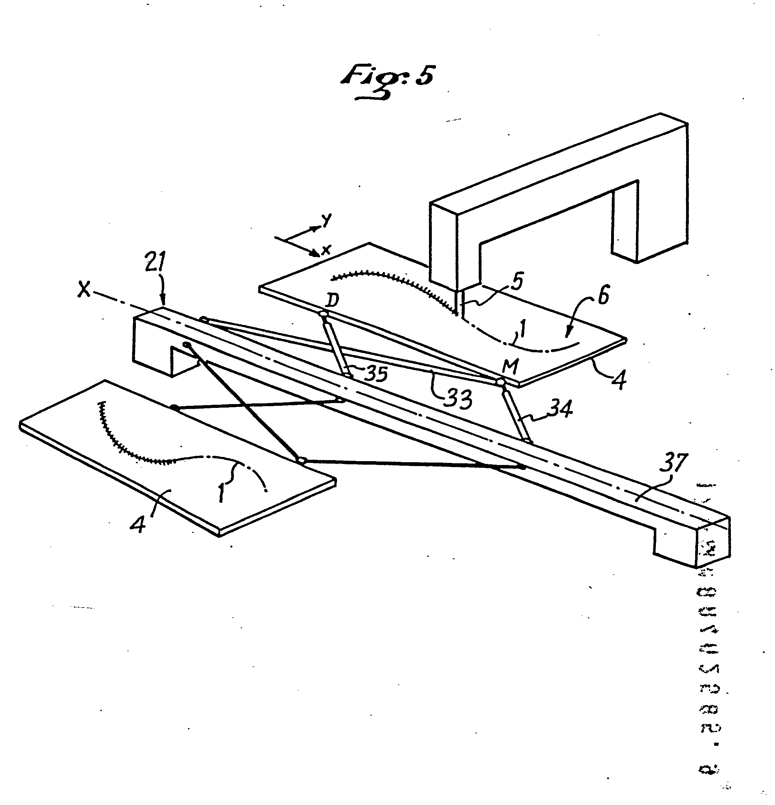

Par ailleurs, la figure 5 montre une disposition avantageuse du système de balayage mécanique (21) qui permet, à l'aide d'un seul dispositif, de générer deux déplacements des cadres respectifs sur deux machines à broder. Cette disposition permettra d'effectuer des broderies symétriquement par rapport à l'axe longitudinal (37) du dispositif.

Naturellement, d'autres mises en oeuvre de la présente invention, à la portée de l'Homme de l'Art, auraient pu être envisagées sans pour autant sortir du cadre de la présente invention.


**Revendications**

1. Machine à broder, permettant d'exécuter des broderies soit par le point de chaînette, soit par le point mousse sur tout matériau de base à broder (6) adapté, le motif de broderie étant défini au moins par une courbe directrice (1) quelconque, ladite machine à broder comportant au moins une broche mécanisée (9) équipée d'une aiguille à crochet (5) et un cadre (4) mobile maintenant tendu ledit matériau de base (6) à broder, **caractérisée** par le fait qu'elle présente des moyens (3) de positionnement et de déplacement bidirectionnel du cadre (4) mobile par rapport à l'aiguille à crochet (5), pour placer le matériau de base à broder (6) dans un plan sensiblement perpendiculaire à l'axe (7) longitudinal de déplacement de l'aiguille (5) et répétitivement à chaque point, pour positionner la zone à broder (8) sous l'aiguille (5) en suivant la courbe directrice (1) du motif, et placer le cadre (4) selon une trajectoire sensiblement tangente à ladite courbe directrice (1) du motif.

2. Machine à broder, selon la revendication 1, **caractérisée** par le fait que lesdits moyens (3) de positionnement et de déplacement bidirectionnel du cadre (4) sont asservis à un dispositif de commande (11) dont les mouvements sont l'image de ceux desdits moyens (3).

3. Machine à broder, selon la revendication 1, **caractérisée** par le fait que lesdits moyens (3) de positionnement et de déplacement bidirectionnel du cadre et de commande angulaire de la broche sont asservis à des moyens (12) de traitement et de calcul électronique dans lesquels la courbe directrice (1) du motif a été enregistrée.

4. Machine à broder, selon la revendication 2 et 3, **caractérisée** par le fait que les moyens de traitement et de calcul comportent :
- des moyens d'introduction (14) de l'image de la courbe directrice du motif à broder (1), coopérant avec ledit dispositif de commande (11),
- une unité centrale (13) électronique programmée,
- des moyens actionneurs (15) commandés et contrôlés par l'unité centrale pour controler les déplacements angulaire et vertical de l'aiguille (5) et des moyens (3) de positionnement et de déplacement du cadre (4).

5. Machine à broder, selon la revendication 4, **caractérisée** par le fait que les moyens (12) de traitement et de calcul comportent des moyens (37) de sélection de mode programme permettant au moins une position "apprentissage" dans laquelle on enregistre la courbe directrice (1) du motif à broder, et une position "reproduction" par laquelle on réalise répétitivement le motif sans intervention manuelle.

6. Machine à broder, selon la revendication 2, **caractérisée** par le fait que le dispositif de commande (11) se présente sous la forme d'un capteur de position angulaire plus ou moins 360° associé à des moyens de manoeuvre (18) tel qu'à un déplacement angulaire $\theta$ dudit dispositif de commande corresponde le même déplacement angulaire du crochet (5) et un déplacement adapté du cadre mobile (4).

7. Machine à broder, selon la revendication 4, **caractérisée** par le fait que la broche mécanisée (9) comporte un détecteur de position (20) de l'aiguille à crochet (5) coopérant avec les moyens (12) de traitement et de calcul pour synchroniser les déplacements du cadre (4) avec les déplacements de l'aiguille (5).

8. Machine à broder, selon la revendication 6, **caractérisée** par le fait que le capteur de position angulaire (19) est constitué par un générateur rotatif d'impulsion optique délivrant dans un code binaire la position angulaire de son arbre de commande, ce dernier étant accouplé à une manivelle de commande (18).

9. Machine à broder, selon la revendication 4, **caractérisée** par le fait que les moyens (3) de positionnement et de déplacement bidirectionnel du cadre (4) asservis sont constitués par tout dispositif de balayage mécanique (21) permettant de déplacer dans un plan horizontal bidirectionnellement ledit cadre (4) en abscisse X et/ou en ordonnée Y comportant au moins deux organes moteurs de déplacement (22, 23) pilotés par lesdits moyens de traitement et de calcul (12).

10 Machine à broder, selon la revendication 9, **caractérisée** par le fait que les moyens (3) de positionnement et de déplacement bidirectionnel du cadre (4) sont constitués par un dispositif de balayage mécanique (21) comprenant :

- des moyens de commande et de déplacement (24, 25) disposés tels qu'ils créent deux mouvements élémentaires dits "parallèles" Xo et Xl dont les directions sont parallèles,
- des moyens de guidage unidirectionnel (26) permettant de conduire dans leur déplacement deux chariots (27, 28) commandés par lesdits moyens moteurs, selon un même axe de déplacement X,
- des moyens de liaison articulés (31) qui relient respectivement ledit cadre à déplacer (4) à chaque moyen de commande de déplacement (24, 25), aptes à transformer les deux mouvements élémentaires dits "parallèles" Xo - Xl en deux mouvements élémentaires dits "orthogonaux" X - Y.

*Fig. 1*

*Fig. 2*

*Fig:3*

*Fig:4*

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-1 980 001 (PERLESZ) <br> * Page 1, paragraphe 2; page 2, lignes 99-105; page 5, lignes 85-90 * <br> --- | 1,2,9 | D 05 C 7/00 |
| Y | US-A-3 459 144 (RAMSEY) <br> * En entier * <br> --- | 1,2,9 | |
| A | US-A-3 459 145 (RAMSEY) <br> --- | | |
| Y | FR-A-2 524 913 (TOKAI) <br> * Page 1; page 5, ligne 21 * <br> ----- | 1 | |

DOMAINES TECHNIQUES
RECHERCHES (Int. Cl.4)

D 05 C

Le présent rapport a été établi pour toutes les revendications

| Lieu de la recherche | Date d'achèvement de la recherche | Examinateur |
|---|---|---|
| LA HAYE | 23-11-1988 | VUILLEMIN L.F. |